# EUROPÄISCHE PATENTSCHRIFT

(11) **EP 0 831 064 B1**
(45) Veröffentlichungstag und Bekanntmachung des Hinweises auf die Patenterteilung: **03.04.2002**
(21) Anmeldenummer: 97115364.8
(22) Anmeldetag: 04.09.1997
(51) Int. Cl.: C02F 3/34, C02F 3/00

(54) **Verfahren zur Einstellung eines Gemisches aus Mikroorganismen und Nahrungsmenge in einem aeroben Belebtschlammprozess bei der Abwasserreinigung**
Process for adjusting a mixture of microorganisms and nutrients in an aerobic activated sludge process for waste water treatment
Procédé pour le réglage d'un mélange de microorganismes et substances nutritives dans un procédé aérobe de boues activées pour traiter les eaux usées

(30) Priorität: 19.09.1996 DE 19638492
(43) Veröffentlichungstag der Anmeldung: 25.03.1998
(73) Patentinhaber: Albert, Alfred, D-63829 Krombach (DE)
(72) Erfinder: Albert, Alfred, D-63829 Krombach (DE)
(74) Vertreter: Solf, Alexander, Dr.

(56) Entgegenhaltungen:
- EP-A- 0 509 609
- WO-A-96/35644
- DE-A- 3 902 626
- GB-A- 2 099 807
- PATENT ABSTRACTS OF JAPAN vol. 004, no. 077 (C-013), 4. Juni 1980 & JP 55 044332 A (HITACHI LTD), 28. März 1980
- PATENT ABSTRACTS OF JAPAN vol. 015, no. 128 (C-0818), 28. März 1991 & JP 03 012296 A (NGK INSULATORS LTD), 21. Januar 1991

## Beschreibung

Die Erfindung betrifft ein Verfahren zur Einstellung eines Gemisches aus Mikroorganismen und Nahrungsmenge, nachfolgend als Biomasse bezeichnet, in einem aeroben Belebtschlammprozeß bei der Abwasserreinigung.

Das Belebtschlammverfahren ist das am weitesten verbreitete Verfahren zur aeroben Abwasserbehandlung häuslicher und industrieller Abwässer.

Bei einer nach dem Belebtschlammverfahren arbeitenden Kläranlage werden die Abwässer meist zunächst über mechanische Reinigungsstufen wie Rechen, Öl-, Fett- und Sandabscheider, Siebe u.ä. geleitet, um Stoffe mit höherer Teilchengröße abzutrennen.

Die in den Abwässern verbliebenen, größtenteils gelösten Stoffe werden dann in einer Belebungsanlage, die aus einem belüfteten, homogen durchmischten Belebungsbecken und einem Sedimentationsbecken (Nachklärbecken) besteht, behandelt.

Im Sedimentationsbecken wird der Belebtschlamm vom gereinigtem Abwasser getrennt und zum größten Teil in das Belebungsbecken zurückgeführt. Überschüssige Mengen dieses Reststoff-, Mikroorgnismen- und Wassergemisches werden als Überschußschlamm weiteren Stufen der Schlammbehandlung (Biogasanlage, Entwässerung, Trocknung, Verbrennung u.ä.) zugeführt.

Das Ziel der Abwasserreinigung ist die Entfernung möglichst aller Inhaltsstoffe, insbesondere jedoch von Kohlenstoff-, Stickstoff- und Phosphorverbindungen.

In einer Belebungsanlage werden nach Literaturangaben im wesentlichen folgende mikrobiologischen Umsetzungen bewirkt:

| | Mineralisation | Nitrifikation | Denitrifikation |
|---|---|---|---|
| beteiligte Mikroorganismen | Saprophyten | Nitritbildner Nitratbildner | zahlreiche Saprophyten |
| | | | |
| N-Verbindung als | Stickstoff- und Energie-Quelle | Stickstoff- und Energie-Quelle | Stickstoff- und Sauerstoffquelle |
| | | | |
| C-Versorgung | organische C-Verbindungen | anorgische C-Verbindungen | organische C-Verbindungen (Energiequelle) |
| | | | |
| O₂-Ansprüche | aerob | aerob (4,3mgO₂/ mgNH₄) | anoxisch |
| | | | |
| Stoffwechselprodukte | H₂O;CO₂; NH₄;PO₄; | H₂O; H+ NO₃;CO₂; | H₂O; N₂; CO₂; PO₄; |
| | | | |
| pH | steigt | fällt | steigt |

EP-A-0 509 609 betrifft ein Verfahren zur Güllebehandlung mit dem Ziel, den Stickstoff zu entfernen, wobei sich das gemessene COC/TOC-Verhältnis auf die Kohlenstoffquelle bezieht, d.h. der Quotient wird in der zuzugebenden Kohlenstoffquelle gemessen, um eine bessere Stickstoffentfernung zu ermöglichen, wobei eine Kohlenstoffquelle mit hohem CSB-Bedarf eingesetzt wird, und so der Sauerstoff vom Nitrat zur Oxidation verwendet wird.

JP 55-044332 offenbart ein Verfahren, bei welchem Stickstoffverbindungen, wie z.B. Harnstoff- und Kohlenstoffverbindungen, wie z.B. Ethanol, dem Zufluß zugegeben werden, um ein bestimmtes Verhältnis zwischen Gesamtstickstoff und biologischem Sauerstoffbedarf (BOD) einzustellen. Ziel ist die Einstellung von Kohlenstoffmenge/Stickstoffmenge bei der Nahrungszufuhr (BOD/TN).

JP 03-012296A offenbart die Einstellung eines Quotienten N/BOD mittels Zugabe einer Nährlösung in einem Alkoholabwasser, wobei ein bestimmtes Verhältnis N/BOD eingestellt wird, um den Mikroorganismen Stickstoff und Phosphor zur Verfügung zu stellen, damit diese überleben können.

WO 96/35644A offenbart ein Verfahren zur Bestimmung der Aktivität der Mikroorganismen, wobei NADH als Maß für die Menge der lebenden Mirkoorganismen im Belebungsbecken gemessen wird, wobei die Messung im Zulauf erfolgt.

Der Erfindung liegt die Aufgabe zugrunde, ein Verfahren zur Einstellung eines Gemisches aus Mikroorganismen und Nahrungsmenge in einem aeroben Belebtschlammprozess, anzugeben, um eine gewünschte Reaktion der Mikroorganismen für die Wachstumsrate und/oder die Stoffwechselprodukte zu steuern.

Diese Aufgabe wird durch das in Anspruch 1 angegebene Verfahren gelöst.

Die Unteransprüche geben vorteilhafte Ausgestaltungen dieses Verfahrens an.

Das Verfahren behebt einen schwerwiegenden Mangel der meisten kontinuierlich arbeitenden biotechnologischen Prozesse bei der Abwasserreinigung, bei welchen der Anteil des biochemisch gebundenen Sauerstoffs unbekannt ist. Dies ist darauf zurückzuführen, dass die Mikroorganismen durch ihren Enzymhaushalt eine Unterscheidung zwischen Substrat, aktiven Mikroorganismen, Mikroorganismen, Fragmenten, Nahrungsdepots in den Zellen und/oder Zellwänden (C-N-O-P-H-Bindungen) erschweren bzw. nicht ermöglichen.

Der Zustand eines Gemisches, insbesondere das Verhältnis an biochemisch gebundenen Atomen, wie C, N, P, O, ist jedoch eine wichtige Grundlage für die Reaktion der Mikroorganismen. Bei der Abwasserreinigung werden im Verhältnis zum zugeführten bzw. gebundenen Sauerstoff Gemische, das heißt eine Biomasse, aus Bakterien, Stoffwechselprodukten (Zucker und andere) und Enzymen erzeugt und/oder Biomasse abgebaut unter Bildung von unerwünschten Produkten, wie NH₄, CO₂, NO₃, PO₄ und anderen.

Überraschenderweise wurde festgestellt, dass Änderungen der Verhältnisse der oxidierbaren Stoffe (CSB-Bestimmung nach der DIN-Methode) zu den C-, N- und P-Anteilen in der Biomasse die Stoffwechselvorgänge der Mikroorganismen wesentlich beeinflussen.

Erfindungsgemäß werden daher (a) der Quotient aus oxidierbaren Stoffen CSB und der organischen Kohlenstoffmenge TOC und (b) der Quotient aus oxidierbaren Stoffen CSB und Gesamtstickstoff Kjeldahl N und (c) der Quotient aus organischer Kohlenstoffmenge TOC und Gesamtstickstoffmenge Kjeldahl N und (d) der Quotient aus Gesamtstickstoffmenge Kjeldahl N und der Phosphormenge bestimmt und diese Quotienten werden auf ein bestimmtes theoretisches möglichst konstantes Verhältnis eingestellt, wodurch eine definierte Prozessführung bei der Abwasserreinigung mit nahezu konstanten Ergebnissen erzielt werden kann.

Ein Ziel bei der Abwasserreinigung nach dem Belebtschlammverfahren ist es, möglichst niedrige Kohlenstoff-, Stickstoff- und Phosphorverbindungen als Restmengen in gereinigtem Abwasser zu erreichen.

Im Stand der Technik werden solche Prozesse nach den Kriterien der Restkonzentrationen der zu entfernenden Stoffe gesteuert, wobei ein Nachteil in der unzuverlässigen Prognose der Reaktion der Biomasse auf die zugeführten Abwasserinhaltsstoffe liegt, mit dem Ergebnis, daß im Stand der Technik diese Restmengen große Schwankungen aufweisen und häufig die amtsseitig geforderten Grenzwerte überschritten werden.

Der folgende Datenvergleich belegt die überraschende und vorteilhafte Wirkung des erfindungsgemäßen Verfahrens bei Anwendung auf einen Belebtschlammprozeß in der Abwasserreinigung.

| Erzielte Vergleichedaten in einer Anlage mit identischer technischer Ausrüdtung : | | |
|---|---|---|
| | allgemeln anerk. regeln und Stand der Technik | gemaß Anspruch |
| 1. Belastungsdaten: | | |
| 1.1. Totaler organischer Kohlenstoff (TOC) | 1000 bis 5000 kg/d | 1000 bis 5000 kg/d |
| 1.2. Gesamtstickstoff (Kjeldahl) | 800 bis 1400 kg/d | 800 bis 1400 kg/d |
| 13. Gesamtphosphor | 80 bis 180 kg/d | 80 bis 180 kg/d |

| 2. Betrieberesultate: | | |
|---|---|---|
| 2.1 spezifischer Sauerstoffverbrauch | 3600 bis 9000 kg/t TOC | 1800 bis 4000 kg/t TOC |
| 2.2 spezifischer Biomasseanfall (Trockensubstanz) | 2400 bis 3600 kg/t TOC | 450 bis 2000 kg/t TOC |

| 3. Restmengen nach der Abwasserreinigung | | |
|---|---|---|
| 3.1 Totaler organischer Kohlenstoff (TOC) | 200 bis 2500 kg/d | 50 bis 500 kg/d |
| 3.2 Gesamtstickstoff (Kjeldahl) | 400 bis 700 kg/d | 50 bis 500 kg/d |
| 3.3. Gesamtphosphor | 24 bis 90 kg/d | 2 bis 3 kg/d |

| 4. Schwankung der Quotienten in der Biomasse | | |
|---|---|---|
| | CSB: C: N →(8000-12000):(1200-1800):(100-300) | (8500-10000):(1000-1050):(250-300) |
| | CSB: C:N → (80-120) : (12-18) : (1-3) | (85-100): (10-10,5) : (2,5-3) |

## Patentansprüche

1. Verfahren zur Einstellung eines Gemisches aus Mikroorganismen und Nahrungsmenge in einem aeroben, Belebtschlammprozess, zur Erzielung einer gewünschten Reaktion der Mikroorganismen für die Wachstumsrate und/oder Stoffwechselprodukte, wobei zur Steuerung und/oder Regelung der Zufuhr von Sauerstoff und/oder Kohlenstoff und/oder Stickstoff und/oder Phosphor und/oder Verbindungen dieser Stoffe, in der Biomasse folgende Quotienten:
(a) der Quotient aus oxidierbaren Stoffen CSB und der organischen Kohlenstoffmenge TOC und
(b) der Quotient aus oxidierbaren Stoffen CSB und Gesamtstickstoff Kjeldahl N und
(c) der Quotient aus organischer Kohlenstoffmenge TOC und Gesamtstickstoff Kjeldahl N und
(d) der Quotient aus Gesamtstickstoff Kjeldahl N und der Phosphormenge
aus gemessenen Mengen bestimmt werden und in deren Abhängigkeit ein bekanntes, erwünschtes Verhältnis dieser Quotienten durch Einbringen von Sauerstoff und/oder Kohlenstoff und/oder Stickstoff und/oder Phosphor und/oder Verbindungen dieser Stoffe in der Biomasse eingestellt wird.

2. Verfahren nach Anspruch 1,
**dadurch gekennzeichnet, dass** der Quotient der Zufuhrkomponenten aus dem Quotienten des Gemisches abgeleitet wird, der sich aufgrund der jeweiligen Prozessbedingungen einstellt und/oder eingestellt hat.

3. Verfahren nach Anspruch 1 und 2,
**dadurch gekennzeichnet, dass** zur Einstellung eines oder mehrerer Quotienten natürliche Kohlenstoffverbindungen verwendet werden, bevorzugt Kohlenhydrate.

4. Verfahren nach Anspruch 1, 2 und 3,
**dadurch gekennzeichnet, dass** zur Einstellung der Quotienten natürliche Stickstoffverbindungen, bevorzugt Aminozucker verwendet werden.

## Claims

1. Process for establishing a mixture of microorganisms and amount of nutrient in an aerobic activated sludge process to achieve a desired reaction of the microorganisms for the growth rate and/or metabolic products, in which, for the open-loop and/or closed-loop control of the feed of oxygen and/or carbon and/or nitrogen and/or phosphorus and/or compounds of these substances, in the biomass the following quotients are determined
(a) the quotient of oxidizable substances COD and total organic carbon TOC and
(b) the quotient of oxidizable substances COD and total Kjeldahl N and
(c) the quotient of total organic carbon TOC and total Kjeldahl N and
(d) the quotient of total Kjeldahl N and the amount of phosphorus
from measured amounts and, as a function of them, a known desired ratio of these quotients is set in the biomass by introducing oxygen and/or carbon and/or nitrogen and/or phosphorus and/or compounds of these substances.

2. Process according to Claim 1, **characterized in that** the quotient of the feed components is derived from the quotient of the mixture which sets itself and/or has set itself as a result of the respective process conditions.

3. Process according to Claim 1 and 2, **characterized in that** to set one or more quotients natural carbon compounds are used, preferably carbohydrates.

4. Process according to Claim 1, 2 and 3, **characterized in that** to set the quotients natural nitrogen compounds are used, preferably amino sugars.

## Revendications

1. Procédé d'ajustement d'un mélange de micro-organismes et de quantités nutritives dans un processus aérobie à boues activées afin d'obtenir une réaction souhaitée des micro-organismes pour le taux de croissance et/ou les produits métaboliques, dans lequel, pour commander et/ou réguler l'apport d'oxygène et/ou de carbone et/ou d'azote et/ou de phosphore et/ou de composés de ces éléments, on détermine dans la biomasse, à partir de quantités mesurées, les quotients suivants :
a) le quotient des substances oxydables DCO et de la quantité de carbone organique COT et
b) le quotient des substances oxydables DCO et l'azote total Kjeldahl N et
c) le quotient de la quantité de carbone organique COT et l'azote total Kjeldahl N et
d) le quotient de l'azote total Kjeldahl N et de la quantité de phosphore
et on ajuste en fonction de ces quantités mesurées un rapport connu souhaité de ces quotients en introduisant de l'oxygène et/ou du carbone et/ou de l'azote et/ou du phosphore et/ou des composés de ces éléments dans la biomasse.

2. Procédé selon la revendication 1, **caractérisé en ce que** le quotient des composants introduits est dérivé du quotient du mélange qui s'établit ou qui s'est établi en fonction des conditions de processus respectives.

3. Procédé selon les revendications 1 et 2, **caractérisé en ce que** l'on utilise pour ajuster un ou plusieurs quotients des composés carbonés naturels, de préférence des hydrates de carbone.

4. Procédé selon les revendications 1, 2 et 3, **caractérisé en ce que** l'on utilise pour ajuster un ou plusieurs quotients des composés azotés naturels, de préférence des sucres aminés.
